# EUROPEAN PATENT SPECIFICATION

(11) **EP 3 820 225 B1**
(45) Date of publication and mention of the grant of the patent: **16.08.2023**
(21) Application number: 20206787.2
(22) Date of filing: 10.11.2020
(51) Int. Cl.: H04W 72/12, H04W 72/27, H04W 74/00, H04W 74/08

(54) **MULTI ACCESS POINT COORDINATION OF TARGET WAKE TIME SCHEDULES**
MEHRFACHZUGANGSPUNKTKOORDINATION VON ZIELWECKZEITPLÄNEN
COORDINATION DE POINTS D'ACCÈS MULTIPLES DES HORAIRES DE TEMPS DE RÉVEIL CIBLE

(30) Priority: 11.11.2019 US 201962933667 P
(43) Date of publication of application: 12.05.2021
(73) Proprietor: INTEL Corporation, Santa Clara, CA 95054 (US); Cariou, Laurent, Portland, OR 97219 (US)
(72) Inventor: CARIOU, Laurent, Oregon, 97219 (US); CHEN, Cheng, Oregon, 97229 (US); HUANG, Po-Kai, California, 95131 (US); BRAVO, Daniel F., Oregon, 97229 (US)
(74) Representative: Viering, Jentschura & Partner mbB Patent- und Rechtsanwälte

(56) References cited:
- WO-A1-2019/125396
- US-A1- 2018 242 373

## Description

### PRIORITY CLAIM

This application claims priority to United States Provisional Patent Application Serial No. 62/933,667 filed November 11, 2019 [reference number AC6281-Z].

### TECHNICAL FIELD

Embodiments pertain to wireless communications. Some embodiments relate to wireless local area networks (WLANs). Some embodiments relate to WLAN communications in accordance with the IEEE 802.11be draft standard (i.e., Extremely High Throughput (EHT)). Some embodiments relate to latency improvement in WLANs.

### BACKGROUND

One issue with communicating data over a WLAN is latency. End to end delay is an important key performance indicator in wireless networks. Broad expansion of WLANs and their technological evolution creates new use cases involving transfer of time sensitive traffic (TST) such as voice-over-internet protocol (VoIP), video streaming, video conferencing, gaming, etc. In such applications, time sensitive traffic (TST) may require low latency to satisfy user requirements and/or to provide good experience. TST is usually characterized by a predictable traffic pattern such as a fixed interarrival time, and load and packet size. The major contributing factors to high delays are network load (e.g., the more traffic is on air, the less time is for TST to be delivered), contention/collisions (e.g., the more devices in network, the harder for TST to access the medium), and transmission/duration (e.g., each device in a wireless network can occupy medium for a long time leaving station (STA) with TST no chances to access the medium). These factors may lead to a high, unpredictable end-to-end latency in a wireless network. Thus, there are general needs for latency reduction in WLANs.

US 20180242373A1 concerns a method and apparatus for communication in a network of WLAN overlapping basic service set (OBSS) are disclosed. A station or an access point may indicate its interference reporting and inter-BSS coordination capabilities in a message. At least one of quality of service (QoS) settings, transmission opportunity (TXOP), restricted access window (RAW) or beacon subinterval schedules, or traffic indication map (TIM) or uplink access window assignment may be coordinated. The coordination may be performed based on the interference measurement report.

WO 2019125396A1 relates to enhanced wireless time sensitive networking (WTSN). A device may establish a control channel. The device may send a first control frame. The device may to send a first data frame to a time sensitive device during a time sensitive time slot.

### SUMMARY

The invention is an apparatus and computer-readable storage medium as defined in the appended claims.

### BRIEF DESCRIPTION OF THE DRAWINGS

FIG. 1A is a TWT element format in accordance with some embodiments;
FIG. 1B is a control field format in accordance with some embodiments;
FIG. 1C is an individual TWT Parameter Set field in accordance with some embodiments;
FIG. 1D is a Broadcast TWT Parameter Set field in accordance with some embodiments;
FIG. 2 is a procedure for multi-AP coordination of target wake time (TWT) schedules in accordance with some embodiments; and
FIG. 3 is a block diagram of a wireless communication device in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

Some embodiments disclosed herein are directed to an access point (AP) (AP1) configured for multi-AP coordination of target wake time (TWT) schedules. In these embodiments, the AP1 is configured to decode a basic service set (BSS) TWT service period (SP) report from a second AP (AP2) of an overlapping basic service set (OBSS). The BSS TWT SPs report may indicate parameters of periodic TWT SPs scheduled by the AP2. When any of TWT SPs scheduled by the AP1 overlap (i.e., use the same channel at the same time), at least partially, with any of the TWT SPs scheduled by the AP2, the AP1 may encode signalling to negotiate an agreement with the AP2 for sharing time and/or frequency resources of a transmission opportunity (TxOP) during an overlapping TWT SP of the AP1. In these embodiments, the AP1 may perform operations during the overlapping TWT SP (i.e., transmit or receive low-latency time-sensitive traffic (TST) from a STA) in accordance with agreed to terms of the negotiated agreement. These embodiments are described in more detail below.

In some embodiments, the BSS TWT SP report is an aggregate report of all TWT SPs in the reporting BSS. In some embodiments, the operations performed in accordance with the negotiated agreement include communicating low-latency time-sensitive traffic (TST) with a station (STA). These embodiments are described in more detail below.

In some embodiments, to negotiate an agreement with the AP2 for sharing resources during the overlapping TWT SP, the AP1 may encode a multi-AP coordination within TWT SP request frame for transmission to the AP2. The request frame may indicate parameters of the overlapping TWT SP of the AP1 and indicating that the AP1 desires to negotiate an agreement for the sharing of resources of the TxOP during the overlapping TWT SP. The request frame may also indicate proposed terms for sharing resources under the negotiated agreement. The AP1 may also decode a multi-AP coordination within TWT SP response frame from the AP2 indicating whether the AP2 will agree to share the resources of the TxOP during the overlapping TWT SP, whether the AP2 has agreed to the proposed terms or whether the AP2 is proposing different terms for sharing resources under the negotiated agreement. These embodiments are described in more detail below.

In some embodiments, the parameters indicated in the BSS TWT SPs report include a TWT channel, a start time, a duration and periodicity of the TWT SPs scheduled by the AP2. These embodiments are described in more detail below.

In some embodiments, the parameters in the BSS TWT SPs report are included in a TWT Parameter Information field. In some embodiments, the BSS TWT SPs report is an information element received in a beacon frame, an action frame or a broadcast frame from the AP2. In some embodiments, the AP2 is an OBSS AP. These embodiments are described in more detail below.

In some embodiments, sharing resources of the TxOP during an overlapping TWT SP may include using a multiple access technique comprising one of time-division multiple access (TDMA), frequency division multiple access (FDMA) and orthogonal frequency division multiple access (OFDMA) during the TxOP. These embodiments are described in more detail below.

In some embodiments, the negotiated agreement indicates whether one or both of the APs will contend for the medium to acquire the TxOP, and how the resources are shared when the TxOP is acquired including information for triggering and synchronizing respective transmissions during the TxOP. These embodiments are described in more detail below.

Improving worst-case latency is one of the objectives of IEEE 802.11be. One of the main issues for addressing low latency remains the lack of coordination between neighbor APs that are sharing the same channel. Most low latency applications being periodic, it is fair to consider that the STA and AP could establish a TWT agreement to define the service period during which this traffic will be sent over the air for this low latency application. As the AP is part of all TWT agreements within its BSS, it has the possibility to negotiate the agreements in order to help ensure that there would be as little overlap as possible between the agreements, and if there were, that the capacity would be sufficient to support the different services.

What the AP currently does not control is: (1) the UL traffic from other associated STAs that may overlap also with the service periods; and (2) the traffic from OBSSs (both UL and DL). For (1), the main solution would be to enforce a quiet period to all other associated STAs during the TWT SP that needs to be protected. 802.11 defined a procedure to use the quiet element and allow the AP to define such periods (by including a quiet element in beacons) during which no transmissions are allowed from associated STAs. For (2), a solution is to try and avoid channels with OBSSs as much as possible. If this is not possible and there are OBSSs, coordination between APs would be needed.

Embodiments disclosed herein propose that an AP, based on all the TWT SP agreements (and its knowledge of buffer status on AP and STAs side), can generate a BSS TWT SPs report that includes the main TWT SP agreements that it has with its associated STAs, and include that BSS TWT SPs report in the beacon frames it transmits, and possibly other frames that can be received by neighbor APs, as well as in frames that are specifically addressed to neighboring APs. In some embodiments, this BSS TWT SPs report includes at the minimum: the start time, duration and periodicity of each periodic TWT SP. This BSS TWT SPs report may include the MAC address of the STA or STAs that will participate in the TWT SP. This may be needed if there is a possibility for tighter cooperation between the neighboring APs (coordinated beamforming, spatial reuse, ...). This BSS TWT SPs report may include the direction of the transmission (DL/UL/both). This BSS TWT SPs report may include the average payload that needs to be carried and possibly the needed transmission airtime (transmission + Acknowledgement)

In some embodiments, the BSS TWT SPs report can be included in beacons frames transmitted by the AP, or any other broadcast frame that can be read by neighboring APs. This BSS TWT SPs report can be included in an action frame that is unicasted to a neighbor AP, or multi-casted to multiple neighbor APs. In some embodiments, a BSS TWT SPs report request frame is defined so that an AP can request its neighboring APs to provide to them this report. This would be useful if the overhead is too big to be put in beacon frames. Very likely, this element should also include a timestamp so that the neighbor AP can align the TWT SP start times and end times with its own TSF (Time Synchronization Function).

Embodiments disclosed herein propose that an AP that receives such a BSS TWT SPs report follows the following operation: schedule its own TWT SPs with its associated STAs to try as much as possible to avoid having overlapping TWT SPs with the TWT SPs from the neighboring APs; and schedule DL transmissions that are not overlapping with the neighbors TWT SPs

Now as the TWT SPs are usually settled based on application level requirements, it may be difficult to move a TWT SP before or after the time at which the packets are arriving at the MAC queue from the upper layer. For that reason, if 2 TWT SPs from 2 neighbor APs have to be scheduled at the same time, the following may be done: Negotiate a way for the APs to share the resources of a TxOP: TDMA or FDMA/OFDMA during the TxOP within that SP; Negotiation would start by recognizing that there are 2 overlapping TWT SPs, and coordinate only during these TWT SPs; If negotiation is successful, it would be agreed that both APs can contend and if one of the two APs gain access to the medium during the overlapping TWT SP or is in control of a TxOP when the overlapping TWT starts, then it would share the resources of its TxOP with the other AP with TDMA or FDMA/OFDMA. If negotiation is successful, the AP may indicate to another AP that it allocates it some resources in frequency or time during a TxOP, and possibly to trigger and synchronize their respective transmissions. In some embodiments, if negotiation is successful, only one of the two APs will contend for the medium during the TWT SP and if a TxOP is acquired by that AP, it would share the resources of its TxOP with the other AP with TDMA or FDMA/OFDMA

Embodiments disclosed herein propose an AP capabilities or operation element field indicating that the AP support such mode and shares the resources accordingly. Embodiments disclosed herein may be applicable also with a soft AP that is operating with NAN. The report could be a translation, with a TWT SP element, of the NAN SP (which is using other design not defined in IEEE). These embodiments may allow two neighboring APs with low latency or QoS constraints services to try and align their schedules to ensure that the services KPIs will be satisfied. This relatively simple solution allows this to be applicable even between 2 unmanaged APs.

In some embodiments, the BSS TWT SPs report element present in the beacon could look as follows: Include a list of TWT subelements; Each TWT subelement would be made of: At least one TWT Parameter Information field (as in current TWT element in 11ax spec in section 9.4.2.199). It may include the MAC address of the STA or STAs that will participate in the TWT SP. It may include the direction of the transmission (DL/UL/both). It may include the average payload that needs to be carried and possibly the needed transmission airtime (transmission + Acknowledgement).

In some embodiments, a multi-AP coordination negotiation for an overlapping TWT SP between 2 APs could looks as follows: Multi-AP coordination within TWT SP request frame; and Multi-AP coordination within TWT SP response frame. In some embodiments, an AP1 with TWT SP1 that overlap (partially or completely) with TWT SP2 of AP2. The AP1 can send a Multi-AP coordination within TWT SP request frame to the other AP2. The request frame may include: A TWT element defining the TWT SP1 that is overlapping with TWT SP2, possibly also a TWT element defining the TWT SP2; possibly instead a TWT SP that has the soonest start time and the latest end time among the start times and end times of both TWT SP1 and SP2.

In some embodiments, in the proposed mode of operation: both access medium and share resources (OFDMA/TDMA) during TWT SP; only AP1 accesses medium and shares resources (OFDMA/TDMA) during TWT SP; only AP2 accesses medium and shares resources (OFDMA/TDMA) during TWT SP; during the TWT SP, the 2 APs will be operating on 2 different channels in order to avoid interference.

In some embodiments, the response can include a TWT element with different parameters or same parameters, can include another proposed mode of operation or the same, and includes a field to indicate if the agreement is agreed, rejected, amended. In some embodiments, the 2 APs would get channel access preference (2 APs contending for one TxOP, which would increase the chances that at least one would acquire the TxOP).

In some embodiments, a physical layer protocol data unit may be a physical layer conformance procedure (PLCP) protocol data unit (PPDU). In some embodiments, the AP and STAs may communicate in accordance with one of the IEEE 802.11 standards, specifically including IEEE draft specification IEEE P802.11ax/D4.0, February 2019.

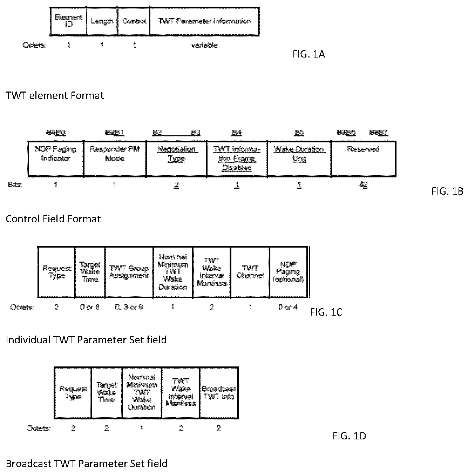

FIG. 1A is a TWT element format in accordance with some embodiments. FIG. 1B is a control field format in accordance with some embodiments. FIG. 1C is an individual TWT Parameter Set field in accordance with some embodiments. FIG. 1D is a Broadcast TWT Parameter Set field in accordance with some embodiments.

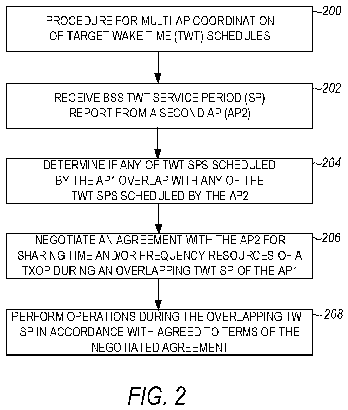

FIG. 2 is a procedure 200 for multi-AP coordination of target wake time (TWT) schedules in accordance with some embodiments. In operation 202, the AP1 may receive a BSS TWT service period (SP) report from a second AP (AP2). In operation 204, the AP1 may determine if any of TWT SPs scheduled by the AP1 overlap with any of the TWT SPs scheduled by the AP2. In operation 206, the AP1 may negotiate an agreement with the AP2 for sharing time and/or frequency resources of a TxOP during an overlapping TWT SP of the AP1. In operation 208, the AP1 may perform operations during the overlapping TWT SP in accordance with agreed to terms of the negotiated agreement.

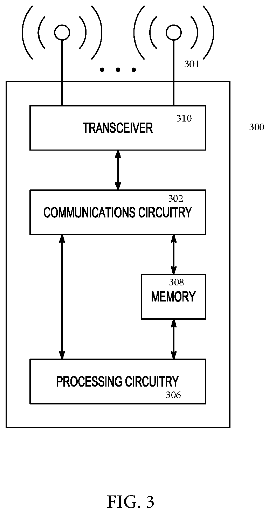

FIG. 3 illustrates a communication station in accordance with embodiments. In one embodiment, FIG. 3 illustrates a functional block diagram of a communication station that may be suitable for use as an AP station or non-AP STA in accordance with some embodiments. The communication station 300 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 300 may include communications circuitry 302 and a transceiver 310 for transmitting and receiving signals to and from other communication stations using one or more antennas 301. The communications circuitry 302 may include circuitry that can operate the physical layer (PHY) communications and/or medium access control (MAC) communications for controlling access to the wireless medium, and/or any other communications layers for transmitting and receiving signals. The communication station 300 may also include processing circuitry 306 and memory 308 arranged to perform the operations described herein. In some embodiments, the communications circuitry 302 and the processing circuitry 306 may be configured to perform operations detailed in the above figures, diagrams, and flows.

In accordance with some embodiments, the communications circuitry 302 may be arranged to contend for a wireless medium and configure frames or packets for communicating over the wireless medium. The communications circuitry 302 may be arranged to transmit and receive signals. The communications circuitry 302 may also include circuitry for modulation/demodulation, upconversion/downconversion, filtering, amplification, etc. In some embodiments, the processing circuitry 306 of the communication station 300 may include one or more processors. In other embodiments, two or more antennas 301 may be coupled to the communications circuitry 302 arranged for sending and receiving signals. The memory 308 may store information for configuring the processing circuitry 306 to perform operations for configuring and transmitting message frames and performing the various operations described herein. The memory 308 may include any type of memory, including non-transitory memory, for storing information in a form readable by a machine (e.g., a computer). For example, the memory 308 may include a computer-readable storage device, read-only memory (ROM), random-access memory (RAM), magnetic disk storage media, optical storage media, flash-memory devices and other storage devices and media.

In some embodiments, the communication station 300 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 300 may include one or more antennas 301. The antennas 301 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 300 may include one or more of a keyboard, a display, a non-volatile memory port, multiple antennas, a graphics processor, an application processor, speakers, and other mobile device elements. The display may be an LCD screen including a touch screen.

Although the communication station 300 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 300 may refer to one or more processes operating on one or more processing elements.

The Abstract is provided to allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus of an access point, AP, (AP1) the apparatus comprising: processing circuitry; and memory, wherein for multi-AP coordination of target wake time, TWT, schedules, the processing circuitry is configured to:
decode (204) a basic service set, BSS, TWT service period, SP, report from a second AP (AP2) of an overlapping basic service set, OBSS, the BSS TWT SPs report indicating parameters of periodic TWT SPs scheduled by the AP2;
when any of TWT SPs scheduled by the AP1 overlap at least partially with any of the TWT SPs scheduled by the AP2, encode signalling to negotiate an agreement (206) with the AP2 for sharing time and/or frequency resources of a transmission opportunity, TxOP, during an overlapping TWT SP of the AP1; and
perform (208) operations during the overlapping TWT SP in accordance with the negotiated agreement, wherein the operations performed in accordance with the negotiated agreement include communicating low-latency time-sensitive traffic, TST, with a station, STA.

2. The apparatus of claim 1, wherein the BSS TWT SP report is an aggregate report of all TWT SPs in the OBSS.

3. The apparatus of claim 1 or claim 2, wherein to negotiate an agreement with the AP2 for sharing resources during the overlapping TWT SP, the processing circuitry is configured to:
encode a multi-AP coordination within TWT SP request frame for transmission to the AP2, the request frame indicating parameters of the overlapping TWT SP and indicating that the AP1 desires to negotiate an agreement for the sharing of resources of the TxOP during the overlapping TWT SP, the request frame further indicating proposed terms for sharing resources under the negotiated agreement; and
decode a multi-AP coordination within TWT SP response frame from the AP2 indicating whether the AP2 will agree to share the resources of the TxOP during the overlapping TWT SP, whether the AP2 has agreed to the proposed terms or whether the AP2 is proposing different terms for sharing resources under the negotiated agreement.

4. The apparatus of any one of claims 1 to 3, wherein the parameters indicated in the BSS TWT SPs report include a TWT channel, a start time, a duration and periodicity of the TWT SPs scheduled by the AP2.

5. The apparatus of any one of claims 1 to 4, wherein the parameters in the BSS TWT SPs report are included in a TWT Parameter Information field.

6. The apparatus of any one of claims 1 to 5, wherein the BSS TWT SPs report is an information element received in a beacon frame, and action frame or a broadcast frame from the AP2.

7. The apparatus of any one of the preceding claims, wherein the AP2 is an OBSS AP.

8. The apparatus of any one of the preceding claims, wherein sharing resources of the TxOP during an overlapping TWT SP include using a multiple access technique comprising one of time-division multiple access, TDMA, frequency division multiple access, FDMA, and orthogonal frequency division multiple access, OFDMA, during the TxOP.

9. The apparatus of any one of the preceding claims, wherein the negotiated agreement indicates:
whether one or both of the APs will contend for a medium to acquire the TxOP; and
how the resources are shared when the TxOP is acquired including information for triggering and synchronizing respective transmissions during the TxOP.

10. The apparatus of any one of the preceding claims, wherein the processing circuitry comprises a baseband processor configured to be coupled to two or more antennas.

11. A computer-readable storage medium that carries instructions for execution by processing circuitry an access point, AP, (AP1) configured for multi-AP coordination of target wake time, TWT, schedules, the processing circuitry is configured to:
decode a basic service set, BSS, TWT service period, SP, report from a second AP (AP2) of an overlapping basic service set, OBSS, the BSS TWT SPs report indicating parameters of periodic TWT SPs scheduled by the AP2;
when any of TWT SPs scheduled by the AP1 overlap at least partially with any of the TWT SPs scheduled by the AP2, encode signalling to negotiate an agreement with the AP2 for sharing time and/or frequency resources of a transmission opportunity, TxOP, during an overlapping TWT SP of the AP1; and
perform operations during the overlapping TWT SP in accordance with the negotiated agreement, wherein the operations performed in accordance with the negotiated agreement include communicating low-latency time-sensitive traffic, TST, with a station, STA.

12. The computer-readable storage medium of claim 11, wherein the BSS TWT SP report is an aggregate report of all TWT SPs in the OBSS.

13. The computer-readable storage medium of claim 11 or claim 12, wherein to negotiate an agreement with the AP2 for sharing resources during the overlapping TWT SP, the processing circuitry is configured to:
encode a multi-AP coordination within TWT SP request frame for transmission to the AP2, the request frame indicating parameters of the overlapping TWT SP and indicating that the AP1 desires to negotiate an agreement for the sharing of resources of the TxOP during the overlapping TWT SP, the request frame further indicating proposed terms for sharing resources under the negotiated agreement; and
decode a multi-AP coordination within TWT SP response frame from the AP2 indicating whether the AP2 will agree to share the resources of the TxOP during the overlapping TWT SP, whether the AP2 has agreed to the proposed terms or whether the AP2 is proposing different terms for sharing resources under the negotiated agreement.

14. The computer-readable storage medium of any one of claims 11 to 13, wherein the parameters indicated in the BSS TWT SPs report include a TWT channel, a start time, a duration and periodicity of the TWT SPs scheduled by the AP2.

15. The computer-readable storage medium of any one of claims 11 to 14, wherein the parameters in the BSS TWT SPs report are included in a TWT Parameter Information field.

## Patentansprüche

1. Vorrichtung eines Zugangspunkts, AP (AP1), wobei die Vorrichtung Folgendes umfasst: eine Verarbeitungsschaltung; und einen Speicher, wobei für eine Multi-AP-Koordination von Zielweckzeitplanungen, TWT-Planungen, die Verarbeitungsschaltung konfiguriert ist zum:
Decodieren (204) eines Basisdienstgruppen-TWT-Dienstperiodenberichts, BSS-TWT-SP-Berichts, von einem zweiten AP (AP2) einer sich überschneidenden Basisdienstgruppe, OBSS, wobei der BSS-TWT-SP-Bericht Parameter periodischer TWT-SP angibt, die durch den AP2 geplant wurden;
dann, wenn sich eine der TWT-SP, die durch den AP1 geplant wurden, zumindest teilweise mit einem der TWT-SP, die durch den AP2 geplant wurden, überschneidet, Codieren einer Signalisierung, um eine Einigung (206) mit dem AP2 zum gemeinsamen Nutzen von Zeit- und/oder Frequenzbetriebsmitteln einer Übertragungsgelegenheit, TxOP, während einer sich überscheidenden TWT-SP des AP1 auszuhandeln; und
Ausführen (208) von Vorgängen während der sich überscheidenden TWT-SP in Übereinstimmung mit der ausgehandelten Einigung, wobei die Vorgänge, die in Übereinstimmung mit der ausgehandelten Einigung ausgeführt werden, enthalten, einen zeitkritischen Verkehr, TST, mit niedriger Latenz mit einer Station, STA, zu kommunizieren.

2. Vorrichtung nach Anspruch 1, wobei der BSS-TWT-SP-Bericht ein aggregierter Bericht aller TWT-SP in der OBSS ist.

3. Vorrichtung nach Anspruch 1 oder Anspruch 2, wobei die Verarbeitungsschaltung, um eine Einigung mit dem AP2 zum gemeinsamen Nutzen von Betriebsmitteln während der sich überschneidenden TWT-SP auszuhandeln, konfiguriert ist zum:
Codieren einer Multi-AP-Koordination innerhalb eines TWT-SP-Anforderungsrahmens für eine Übertragung an den AP2, wobei der Anforderungsrahmen Parameter der sich überschneidenden TWT-SP angibt und angibt, dass der AP1 wünscht, eine Einigung für die gemeinsame Nutzung von Betriebsmitteln der TxOP während der sich überschneidenden TWT-SP auszuhandeln, wobei der Anforderungsrahmen ferner vorgeschlagene Bedingungen zum gemeinsamen Nutzen von Betriebsmitteln unter der ausgehandelten Einigung angibt; und
Decodieren einer Multi-AP-Koordination innerhalb eines TWT-SP-Antwortrahmens von dem AP2, der angibt, ob der AP2 zustimmen wird, die Betriebsmittel der TxOP während der sich überschneidenden TWT-SP gemeinsam zu nutzen, ob der AP2 den vorgeschlagenen Bedingungen zugestimmt hat oder ob der AP2 andere Bedingungen zum gemeinsamen Nutzen von Betriebsmitteln unter der ausgehandelten Einigung vorschlägt.

4. Vorrichtung nach einem der Ansprüche 1 bis 3, wobei die Parameter, die in dem BSS-TWT-SP-Bericht angegeben werden, einen TWT-Kanal, eine Startzeit, eine Dauer und eine Periodizität der durch den AP2 geplanten TWT-SP enthalten.

5. Vorrichtung nach einem der Ansprüche 1 bis 4, wobei die Parameter in dem BSS-TWT-SP-Bericht in einem TWT-Parameterinformationsfeld enthalten sind.

6. Vorrichtung nach einem der Ansprüche 1 bis 5, wobei der BSS-TWT-SP-Bericht ein Informationselement ist, das in einem Baken-Rahmen und einem Handlungsrahmen oder einem Rundsenderahmen von dem AP2 empfangen wird.

7. Vorrichtung nach einem der vorgehenden Ansprüche, wobei der AP2 ein OBSS-AP ist.

8. Vorrichtung nach einem der vorhergehenden Ansprüche, wobei das gemeinsame Nutzen von Betriebsmittel der TxOP während einer sich überschneidenden TWT-SP umfasst, eine Mehrfachzugangstechnik, die einen Zeitmehrfachzugang, TDMA, oder einen Frequenzmehrfachzugang, FDMA, oder einen Orthogonalfrequenzmehrfachzugang, OFDMA, umfasst, während der TxOP zu verwenden.

9. Vorrichtung nach einem der vorhergehenden Ansprüche, wobei die ausgehandelte Einigung Folgendes angibt:
ob einer oder beide AP um ein Medium kämpfen werden, um die TxOP zu erlangen; und
wie die Betriebsmittel gemeinsam genutzt werden, wenn die TxOP erlangt wird, das Informationen zum Auslösen und Synchronisieren jeweiliger Übertragungen während der TxOP enthält.

10. Vorrichtung nach einem der vorhergehenden Ansprüche, wobei die Verarbeitungsschaltung einen Basisbandprozessor umfasst, der konfiguriert ist, an zwei oder mehr Antennen gekoppelt zu werden.

11. Computerlesbares Speichermedium, das Anweisungen für eine Ausführung durch eine Verarbeitungsschaltung eines Zugangspunkts, AP, (AP1), der für eine Multi-AP-Koordination von Zielweckzeitplanungen, TWT-Planungen, konfiguriert ist, trägt, wobei die Verarbeitungsschaltung konfiguriert ist zum:
Decodieren eines Basisdienstgruppen-TWT-Dienstperiodenberichts, BSS-TWT-SP-Berichts, von einem zweiten AP (AP2) einer sich überschneidenden Basisdienstgruppe, OBSS, wobei der BSS-TWT-SP-Bericht Parameter periodischer TWT-SP angibt, die durch den AP2 geplant wurden;
dann, wenn sich eine der TWT-SP, die durch den AP1 geplant wurden, zumindest teilweise mit einer der TWT-SP, die durch den AP2 geplant wurden, überschneidet, Codieren einer Signalisierung, um eine Einigung mit dem AP2 zum gemeinsamen Nutzen von Zeit- und/oder Frequenzbetriebsmitteln einer Übertragungsgelegenheit, TxOP, während einer sich überscheidenden TWT-SP des AP1 auszuhandeln; und
Ausführen von Vorgängen während der sich überscheidenden TWT-SP in Übereinstimmung mit der ausgehandelten Einigung, wobei die Vorgänge, die in Übereinstimmung mit der ausgehandelten Einigung ausgeführt werden, enthalten, einen zeitkritischen Verkehr, TST, mit niedriger Latenz mit einer Station, STA, zu kommunizieren.

12. Computerlesbares Speichermedium nach Anspruch 11, wobei der BSS-TWT-SP-Bericht ein aggregierter Bericht aller TWT-SP in der OBSS ist.

13. Computerlesbares Speichermedium nach Anspruch 11 oder Anspruch 12, wobei, um eine Einigung mit dem AP2 zum gemeinsamen Nutzen von Betriebsmitteln während der sich überschneidenden TWT-SP auszuhandeln, die Verarbeitungsschaltung konfiguriert ist zum:
Codieren einer Multi-AP-Koordination innerhalb eines TWT-SP-Anforderungsrahmens für eine Übertragung an den AP2, wobei der Anforderungsrahmen Parameter der sich überschneidenden TWT-SP angibt und angibt, dass der AP1 wünscht, eine Einigung für die gemeinsame Nutzung von Betriebsmitteln der TxOP während der sich überschneidenden TWT-SP auszuhandeln, wobei der Anforderungsrahmen ferner vorgeschlagene Bedingungen zum gemeinsamen Nutzen von Betriebsmitteln unter der ausgehandelten Einigung angibt; und
Decodieren einer Multi-AP-Koordination innerhalb eines TWT-SP-Antwortrahmens von dem AP2, der angibt, ob der AP2 zustimmen wird, die Betriebsmittel der TxOP während der sich überschneidenden TWT-SP gemeinsam zu nutzen, ob der AP2 den vorgeschlagenen Bedingungen zugestimmt hat oder ob der AP2 andere Bedingungen zum gemeinsamen Nutzen von Betriebsmitteln unter der ausgehandelten Einigung vorschlägt.

14. Computerlesbares Speichermedium nach einem der Ansprüche 11 bis 13, wobei die Parameter, die in dem BSS-TWT-SP-Bericht angegeben werden, einen TWT-Kanal, eine Startzeit, eine Dauer und eine Periodizität der durch den AP2 geplanten TWT-SP enthalten.

15. Computerlesbares Speichermedium nach einem der Ansprüche 11 bis 14, wobei die Parameter in dem BSS-TWT-SP-Bericht in einem TWT-Parameterinformationsfeld enthalten sind.

## Revendications

1. Appareil d'un point d'accès, noté AP, (AP1), l'appareil comprenant : une circuiterie de traitement ; et une mémoire, la circuiterie de traitement étant configurée, pour une coordination multi-AP de programmations de temps d'éveil de cible, noté TWT, pour :
décoder (204) un rapport de périodes de service, notées SP, de TWT d'un ensemble de services de base, noté BSS, en provenance d'un deuxième AP (AP2) d'un ensemble de services de base en chevauchement, noté OBSS, le rapport de SP de TWT du BSS indiquant des paramètres de SP de TWT périodiques programmées par l'AP2 ;
lorsque l'une quelconque ou plusieurs des SP de TWT programmées par l'AP1 chevauche ou chevauchent au moins partiellement l'une quelconque ou plusieurs des SP de TWT programmées par l'AP2, coder une signalisation pour négocier un accord (206) avec l'AP2 pour le partage de ressources temps et/ou fréquence d'une opportunité de transmission, noté TxOP, durant une SP de TWT en chevauchement de l'AP1 ; et
réaliser (208) des opérations durant la SP de TWT en chevauchement conformément à l'accord négocié, les opérations réalisées conformément à l'accord négocié comportant la communication d'un trafic sensible au facteur temps, noté TST, à faible latence avec une station, notée STA.

2. Appareil selon la revendication 1, dans lequel le rapport de SP de TWT du BSS est un rapport consolidé de toutes les SP de TWT dans l'OBSS.

3. Appareil selon la revendication 1 ou la revendication 2, dans lequel, pour négocier un accord avec l'AP2 pour le partage de ressources durant la SP de TWT en chevauchement, la circuiterie de traitement est configurée pour :
coder une coordination multi-AP à l'intérieur d'une trame de requête de SP de TWT en vue de sa transmission à l'AP2, la trame de requête indiquant des paramètres de la SP de TWT en chevauchement et indiquant que l'AP1 souhaite négocier un accord pour le partage de ressources de la TxOP durant la SP de TWT en chevauchement, la trame de requête indiquant en outre des modalités proposées pour le partage de ressources en vertu de l'accord négocié ; et
décoder une coordination multi-AP à l'intérieur d'une réponse de SP de TWT en provenance de l'AP2 indiquant si l'AP accepte de partager les ressources de la TxOP durant la SP de TWT en chevauchement, si l'AP2 a accepté les modalités proposées ou si l'AP2 propose des modalités différentes pour le partage de ressources en vertu de l'accord négocié.

4. Appareil selon l'une quelconque des revendications 1 à 3, dans lequel les paramètres indiqués dans le rapport de SP de TWT du BSS comportent un canal de TWT, un temps de début, une durée et une périodicité des SP de TWT programmées par l'AP2.

5. Appareil selon l'une quelconque des revendications 1 à 4, dans lequel les paramètres dans le rapport de SP de TWT du BSS sont incorporés dans un champ d'informations sur les paramètres de TWT.

6. Appareil selon l'une quelconque des revendications 1 à 5, dans lequel le rapport de SP de TWT du BSS est un élément d'information reçu dans une trame de balise, et une trame d'action ou une trame de diffusion en provenance de l'AP2.

7. Appareil selon l'une quelconque des revendications précédentes, dans lequel l'AP2 est un AP de l'OBSS.

8. Appareil selon l'une quelconque des revendications précédentes, dans lequel le partage de ressources de la TxOP durant une SP de TWT en chevauchement comporte l'utilisation d'une technique d'accès multiple comprenant soit un accès multiple par répartition dans le temps, noté TDMA, soit un accès multiple par répartition en fréquence, noté FDMA, soit un accès multiple par répartition orthogonale de la fréquence, noté OFDMA, durant la TxOP.

9. Appareil selon l'une quelconque des revendications précédentes, dans lequel l'accord négocié indique :
si l'un des AP ou les deux se disputera ou se disputeront un support pour acquérir la TxOP ; et
la façon dont les ressources sont partagées lorsque la TxOP est acquise y compris des informations pour le déclenchement et la synchronisation de transmissions respectives durant la TxOP.

10. Appareil selon l'une quelconque des revendications précédentes, dans lequel la circuiterie de traitement comprend un processeur de bande de base configuré pour être couplé à au moins deux antennes.

11. Support de stockage lisible par ordinateur qui embarque des instructions à exécuter par une circuiterie de traitement d'un point d'accès, noté AP, (AP1) configuré pour une coordination multi-AP de programmations de temps d'éveil de cible, noté TWT, la circuiterie de traitement étant configurée pour :
décoder un rapport de périodes de service, notées SP, de TWT d'un ensemble de services de base, noté BSS, en provenance d'un deuxième AP (AP2) d'un ensemble de services de base en chevauchement, noté OBSS, le rapport de SP de TWT du BSS indiquant des paramètres de SP de TWT périodiques programmées par l'AP2 ;
lorsque l'une quelconque ou plusieurs des SP de TWT programmées par l'AP1 chevauche ou chevauchent au moins partiellement l'une quelconque ou plusieurs des SP de TWT programmées par l'AP2, coder une signalisation pour négocier un accord avec l'AP2 pour le partage de ressources temps et/ou fréquence d'une opportunité de transmission, noté TxOP, durant une SP de TWT en chevauchement de l'AP1 ; et
réaliser des opérations durant la SP de TWT en chevauchement conformément à l'accord négocié, les opérations réalisées conformément à l'accord négocié comportant la communication d'un trafic sensible au facteur temps, noté TST, à faible latence avec une station, notée STA.

12. Support de stockage lisible par ordinateur selon la revendication 11, dans lequel le rapport de SP de TWT du BSS est un rapport consolidé de toutes les SP de TWT dans l'OBSS.

13. Support de stockage lisible par ordinateur selon la revendication 11 ou la revendication 12, dans lequel, pour négocier un accord avec l'AP2 pour le partage de ressources durant la SP de TWT en chevauchement, la circuiterie de traitement est configurée pour :
coder une coordination multi-AP à l'intérieur d'une trame de requête de SP de TWT en vue de sa transmission à l'AP2, la trame de requête indiquant des paramètres de la SP de TWT en chevauchement et indiquant que l'AP1 souhaite négocier un accord pour le partage de ressources de la TxOP durant la SP de TWT en chevauchement, la trame de requête indiquant en outre des modalités proposées pour le partage de ressources en vertu de l'accord négocié ; et
décoder une coordination multi-AP à l'intérieur d'une réponse de SP de TWT en provenance de l'AP2 indiquant si l'AP accepte de partager les ressources de la TxOP durant la SP de TWT en chevauchement, si l'AP2 a accepté les modalités proposées ou si l'AP2 propose des modalités différentes pour le partage de ressources en vertu de l'accord négocié.

14. Support de stockage lisible par ordinateur selon l'une quelconque des revendications 11 à 13, dans lequel les paramètres indiqués dans le rapport de SP de TWT du BSS comportent un canal de TWT, un temps de début, une durée et une périodicité des SP de TWT programmées par l'AP2.

15. Support de stockage lisible par ordinateur selon l'une quelconque des revendications 11 à 14, dans lequel les paramètres dans le rapport de SP de TWT du BSS sont incorporés dans un champ d'informations sur les paramètres de TWT.
